# FASCICULE DE BREVET EUROPEEN

(11) **EP 4 038 447 B1**
(45) Date de publication et mention de la délivrance du brevet: **06.08.2025**
(21) Numéro de dépôt: 20793027.2
(22) Date de dépôt: 30.09.2020
(51) Int. Cl.: G02F 1/13

(54) **MODULATEUR SPATIAL DE LUMIERE ADRESSE THERMO-OPTIQUEMENT**
THERMOOPTISCH ADRESSIERTER RÄUMLICHER LICHTMODULATOR
THERMO-OPTICALLY ADDRESSED SPATIAL LIGHT MODULATOR

(30) Priorité: 01.10.2019 FR 1910894
(43) Date de publication de la demande: 10.08.2022
(73) Titulaire: Fastlite, 06600 Antibes (FR); Centre National de la Recherche Scientifique, 75794 Paris Cedex 16 (FR)
(72) Inventeur: FORGET, Nicolas, 06600 ANTIBES (FR); DI PIETRO, Vittorio, 06600 ANTIBES (FR); JULLIEN, Aurélie, 75794 Paris (FR)
(74) Mandataire: Bandpay & Greuter
(86) Numéro de dépôt international: PCT/FR2020/051711
(87) Numéro de publication internationale: WO 2021/064326

(56) Documents cités:
- EP-A2- 0 395 113
- US-A1- 2010 045 924
- DI PIETRO VITTORIO MARIA ET AL: "Thermally-induced nonlinear spatial shaping of infrared femtosecond pulses in nematic liquid crystals", ARXIV.ORG, CORNELL UNIVERSITY LIBRARY, 201 OLIN LIBRARY CORNELL UNIVERSITY ITHACA, NY 14853, 28 September 2019 (2019-09-28), XP081484660, DOI: 10.1088/1612-202X/AAF329

## Description

### 1. DOMAINE TECHNIQUE

La présente invention se rapporte au domaine des modulateurs spatial de lumière réflectifs, et en particulier à celui des modulateurs spatiaux de lumière réflectifs contrôlés optiquement.

### Technique antérieure

D'une façon générale, on sait que les modulateurs spatiaux de lumière réflectifs (MSLR) sont des objets quasi-planaires, permettant de moduler, en tout point du MSLR, l'intensité, la phase ou la polarisation d'un faisceau de lumière incident. Ils sont caractérisés par une réflectivité, une résolution spatiale, un temps de réponse et une dynamique de modulation. Il est d'usage de classer les MSLR en catégories en fonction (i) de leur technologie d'adressage : électrique ou optique, et (ii) du et des paramètre(s) optique(s) modulé(s) : intensité, phase, polarisation.

D'une manière générale, les MSLR adressés électriquement sont constitués d'éléments segmentés, contrôlés individuellement par un signal électrique. La liste, non exhaustive, des MSLR adressés électriquement comprend :
1) les miroirs déformables, constitués d'une membrane réflective déformable et d'un ensemble d'actuateurs. Ces MSLR ne permettent que de moduler la phase spatiale. Les actuateurs peuvent être :
   a) de technologie MEMS (« microelectromechanical systems ») ;
   b) thermique, comme décrit, par exemple, par M. Kasprzack et al dans "Performance of a thermally deformable mirror for correction of low-order aberrations in laser beams." (Applied optics 52.12 (2013): 2909-2916).
2) les matrices de micro-miroirs (acronyme « DMD » en anglais). Ces dispositifs ne permettent qu'une modulation d'intensité ;
3) les cristaux magnéto-optiques contrôlés via une matrice de micro-bobines. Ces dispositifs permettent une modulation de polarisation ou d'intensité ;
4) les cellules de cristaux liquides de technologie de type LCoS. Ces cellules sont constituées d'une électrode transparente, d'une première couche mince d'ancrage, d'une couche de cristal liquide en phase nématique, d'une seconde couche mince d'ancrage et d'une couche mince réflective segmentée déposée sur un substrat de silicium relié à une électronique CMOS. Un champ électrique entretenu entre l'électrode transparente et le semi-conducteur contrôle l'orientation moléculaire moyenne locale du cristal liquide et module ses indices optiques. Ces dispositifs permettent une modulation de l'intensité, de la phase ou de la polarisation suivant les détails de réalisation et la présence ou l'absence d'éléments polarisants additionnels ;
5) les cristaux liquides thermotropes contrôlées par un élément chauffant.

D'une manière générale, les MSLR adressés optiquement comprennent des dispositifs constitués d'une cellule de cristal liquide et d'un système de contrôle de l'orientation moléculaire moyenne locale dudit cristal liquide. La liste, non exhaustive, des MSLR adressés optiquement comprend essentiellement :
1) les valves optiques à photoconducteur, dont le principe est analogue à la technologie LCoS à la différence que le semi-conducteur segmenté est remplacée par un matériau photoconducteur continu, le dit photoconducteur étant illuminé par un faisceau optique de contrôle. De même que les LCoS, ces dispositifs permettent une modulation de l'intensité, de la phase ou de la polarisation suivant les détails de réalisation,
2) les valves optiques thermiques, constituées de cristaux liquides thermotropes en phase smectique organisés en texture homéotrope, dont la température locale est contrôlée par laser. Le principe de modulation repose sur une transition de phase smectique-isotrope formant des centres diffusant. Ces dispositifs ne permettent donc qu'une modulation en intensité.

Concernant les valves optiques thermiques dont la température locale est contrôlée par laser, plusieurs mécanismes de contrôle de la température locale du cristal liquide sont connus :
a. par absorption, totale ou partielle, du laser de contrôle, par le cristal liquide ;
b. par absorption, totale ou partielle, du laser de contrôle, par un colorant mélangé au cristal liquide ;
c. par absorption, totale ou partielle, du laser de contrôle, par une couche mince en contact avec le cristal liquide telle :
   i. qu'une électrode transparente, par exemple une couche ITO (oxyde d'indium et d'étain) ;
   ii. qu'une couche semiconductrice ;
   iii. qu'une couche métallique, comme proposé par A. G. Dewey dans "Projection Storage Displays Using Laser-Addressed Smectic Liquid Crystals." (The Physics and Chemistry of Liquid Crystal Devices. Springer, Boston, MA, 1980. 219-239).

On sait également, d'une manière générale, que les MSLR contrôlés électriquement ne permettent de contrôler indépendamment les propriétés de la lumière réfléchie que sur un nombre limité de zones prédéfinies par le fabriquant, ce nombre étant approximativement égal nombre d'actuateurs ou de segments d'électrodes. De plus, à la jonction entre deux actuateurs ou deux segments adjacents, se trouvent des interstices où le MSLR est inactif et/ou présente des discontinuités de la propriété optique modulée. Les MSLR adressés optiquement ne présentent ce type d'effet de « pixel-lisation » et sont préférés pour un certain nombre d'applications comme, par exemple, la correction de front d'onde des lasers.

Il est également connu que le point commun à tous les MSLR adressés optiquement est la structure stratifiée et qu'il est d'usage de distinguer le faisceau de lecture du faisceau d'écriture avec la convention suivante : le faisceau de lecture est le faisceau dont on souhaite moduler une propriété, le faisceau d'écriture permet de contrôler la modulation portée par le MSLR. La structure empilée des MSLR résulte de la nécessité d'isoler les faisceaux d'écriture et de lecture et donc de réaliser une barrière optique au sein du composant.

Parmi les solutions techniques proposées, seules les valves optiques à photoconducteur et les LCoS permettent une modulation continue et arbitraire de la phase spatiale optique avec une résolution inférieure à la centaine de micromètres.

Un premier inconvénient des valves optiques à photoconducteur et des LCoS est qu'ils nécessitent des électrodes afin d'entretenir un champ électrique alternatif dans le cristal liquide. Le faisceau de lecture traversant nécessairement au moins une électrode, cette dernière doit donc être transparente à la longueur d'onde du faisceau de lecture. Cette électrode transparente peut être formée, par exemple, d'un mélange (ITO) d'oxyde d'indium (In2O3) et d'oxyde d'étain (SnO2), typiquement transparent sur la plage 0.3-1.5 µm. La plage de transparence de l'électrode, est, d'une manière générale, beaucoup plus restreinte que celle des cristaux liquides comme, par exemple, le cristal liquide connu sous l'abréviation E7 qui est transparent de 0.35 à 11 µm.

Un deuxième inconvénient des valves optiques à photoconducteur et des LCoS est la faible dynamique de modulation de la phase optique qui résulte de la faible épaisseur des cristaux liquides, typiquement moins de 20 micromètres. Cette épaisseur résulte d'un compromis entre (i) la stabilité et l'uniformité de la phase nématique (ii) la différence de potentiel électrique appliqué entre les électrodes, (iii) la dynamique de modulation, (iv) le temps caractéristique de réponse. Par ailleurs, le contrôle en intensité ne nécessite pas un déphasage supérieur à π/2 radians. D'une manière générale, les cristaux liquides de moins 20 micromètres, ne permettent pas de contrôler la phase optique du faisceau de lecture avec une dynamique de plus de quelques radians, notamment aux grandes longueurs d'onde.

Ces deux inconvénients limitent typiquement l'usage pratique des MSLR au visible et au proche infrarouge (<1.5 µm) avec un déphasage optique maximal de l'ordre de 2π radians.

Il n'existe donc pas actuellement de MSLR de contrôle de phase de la lumière susceptible d'être adaptée de manière satisfaisante à des lumières ayant des longueurs d'onde supérieures et augmentant le déphasage optique. EP 0 395 113 A2 décrit une valve de lumière à cristal liquide écrite par laser.

### Résumé de l'invention

La présente invention propose un modulateur spatial de lumière réflectif à adressage optique pour moduler en continu la phase et/ou la polarisation d'un faisceau optique de lecture. Le module comprend une couche de cristal liquide en phase nématique thermotrope d'une épaisseur supérieure ou égale à 20 micromètres. La couche de cristal liquide est comprise entre un premier élément d'ancrage et un deuxième élément d'ancrage. Le module comprend en outre une première couche, disposée contre le deuxième élément d'ancrage, possédant des propriétés réfléchissantes de la lumière ayant une longueur d'onde appartenant à une première plage de longueurs d'onde. Le module comprend également une deuxième couche, disposée contre la première couche, ayant des propriétés absorbantes de la lumière ayant une longueur d'onde comprise dans une deuxième plage de longueurs d'ondes.

Un tel MSLR apporte une solution technique à ces deux limitations précédemment mentionnées, c'est-à-dire qu'il permet de contrôler de manière continue et arbitraire la phase d'une lumière ayant une longueur d'onde supérieure à 1.5 µm avec une dynamique supérieure à 2π radians. En effet, le MSLR selon l'invention comprend une couche épaisse (≥20 µm) d'un cristal liquide maintenu entre un premier et un deuxième éléments d'ancrage. Contre le deuxième élément d'ancrage sont apposées, l'une contre l'autre, deux couches possédant respectivement une propriété réfléchissante et absorbante de la lumière, ce qui permet un contrôle en température du cristal liquide sans requérir la présence d'un contrôle électrique, et donc d'électrodes. En effet, la couche réflective permet de réfléchir un faisceau optique de lecture - qui traverse ainsi deux fois la couche de cristal liquide - et la couche absorbante permet d'élever localement la température des cristaux liquides par l'absorption d'un faisceau optique d'écriture (ou encore nommé faisceau optique d'adressage). On comprend que l'élévation de température du cristal liquide résulte de la diffusion de la chaleur à travers la couche réflective et le deuxième élément d'ancrage. On comprend également que l'élévation de température du cristal liquide est réversible et qu'elle ne conduit pas à une transition de phase permanente du cristal liquide.

Le MSLR selon l'invention permet d'atteindre la température de transition vers la phase isotrope d'un cristal liquide, permettant alors de contrôler la biréfringence du cristal liquide avec une dynamique supérieure ou égale à celle permise par un contrôle électrique.

De plus, le MSLR selon l'invention est compatible avec des couches épaisses (supérieures ou égales à 20 µm) de cristaux liquides, ce qui permet d'augmenter significativement la dynamique de contrôle de la phase optique.

Le MSLR selon l'invention permet donc un contrôle continu et arbitraire de la phase optique spatiale, sans nécessiter d'électrode transparente du côté du faisceau de lecture, tout en offrant une dynamique de modulation suffisamment importante pour couvrir un déphasage supérieur à 2π radians pour toute longueur d'onde comprise dans la plage de transparence du cristal liquide.

D'autres avantages de l'invention seront discutés dans la description détaillée.

Selon différents modes de réalisation, toute combinaison d'au moins l'une des caractéristiques suivantes peut être implémentée :
- la première plage de longueurs d'onde, qui est comprise entre 0,5 micromètres et 2,5 micromètres bornes incluses, et la deuxième plage de longueurs d'onde se recouvrent au moins partiellement ou ne se recouvrent pas ;
- la première couche est une couche métallique comprenant au moins un métal, de préférence le métal étant sélectionné parmi : l'or, l'argent, le chrome, le cuivre, le titane, le platine, le palladium ;
- la deuxième couche est une couche métallique comprenant au moins un métal, le métal étant de préférence sélectionné parmi : l'or, l'argent, le chrome, le cuivre, le titane, le platine, le palladium ;
- la première couche et la deuxième couche forment une unique couche métallique comprenant un métal, le métal de l'unique couche comprenant de préférence de l'or, et l'unique couche ayant de préférence une épaisseur supérieure ou égale à 100 nanomètres ;
- la première plage de longueurs d'onde de la première couche est comprise entre 200 nanomètres et 10 micromètres, bornes incluses ;
- la deuxième couche comprend au moins un matériau sélectionné parmi : du tellurure de cadmium (CdTe), du silicium (Si), du germanium (Ge), du chrome noir ;
- le premier élément d'ancrage et/ou le deuxième élément d'ancrage sont formées d'au moins un matériau sélectionné parmi un polyimide (IP), un SiOx structuré en une ou plusieurs sous-couches, une couche métallique structurée ;
- un premier substrat transparent est disposé contre le premier élément d'ancrage, un deuxième substrat transparent disposé contre le deuxième élément d'ancrage ;
- le premier substrat et/ou le deuxième substrat comprend au moins un matériau transparent sélectionné parmi un verre, une résine, un plastique, un verre borosilicate crown, une silice fondue ;
- le premier substrat transparent comprend le premier élément d'ancrage ;
- le premier élément d'ancrage et le deuxième élément d'ancrage déterminent des directions d'ancrage qui sont orientées parallèlement et/ou perpendiculairement ;
- le premier et le deuxième élément d'ancrage comprennent des accroches qui déterminent les directions d'ancrage, contrôlant ainsi une orientation moléculaire moyenne locale du cristal liquide ;
- les accroches du premier élément d'ancrage et du deuxième élément d'ancrage déterminent une même direction d'ancrage ou deux directions d'ancrage orthogonales entre elles ;
- un masque d'amplitude apte à contrôler la quantité de lumière atteignant un point de la deuxième couche ;
- une bordure étanche maintenant le cristal liquide entre la première et la deuxième couche d'ancrage ;
- l'épaisseur du cristal liquide est comprise entre 20 et 200 micromètres, bornes incluses.

La présente invention propose également un système optique comprenant :
- un modulateur selon l'invention ;
- une source lumineuse pour générer un faisceau optique d'adressage ayant une longueur d'onde comprise dans la deuxième plage de longueurs d'onde.

Le système optique peut également comprendre une seconde source lumineuse pour générer un faisceau optique de lecture pouvant être modulé par le modulateur du système optique.

### Brève description des dessins

Des modes de réalisation de l'invention vont être maintenant décrits au moyen d'exemples non-limitatifs de l'invention, et en référence aux figures, où :
FIG. 1 est un exemple schématique de la structure d'un MSLR selon l'invention ;
FIG. 2 est un exemple schématique d'un fonctionnement d'un MSLR selon l'invention ;
FIG. 3 est un premier exemple schématique d'un faisceau optique d'écriture pouvant être utilisé un MSLR selon l'invention ;
FIG. 4 est un second exemple schématique d'un faisceau optique d'écriture pouvant être utilisé un MSLR selon l'invention.

### Description des modes de réalisation

La présente invention concerne un modulateur spatial de lumière réflectif (MSLR) à adressage optique pour moduler la phase et/ou la polarisation d'un faisceau optique de lecture. L'adressage est typiquement réalisé à l'aide d'un faisceau optique d'adressage, ou encore nommé faisceau optique d'écriture.

Le MSLR comprend une couche de cristal liquide en phase nématique thermotrope d'une épaisseur supérieur ou égale à 20 micromètres (µm). D'une façon générale, les cristaux liquides sont des systèmes possédant un nombre de symétries intermédiaires entre ceux des phases solide et liquide. Ils sont caractérisés par un ordre orientationnel de type cristallin à longue portée, tout un conservant un désordre de type liquide dans au moins une des directions de l'espace. Ce comportement directionnel collectif dépend de la nature et la structure moléculaire mais aussi de la température et de paramètres extérieurs comme les forces mécaniques, électriques ou magnétiques.

Les mésophases des cristaux liquides thermotropes, dont le seul paramètre d'ordre est la température, sont classifiées selon leur degré d'ordre : phase isotrope, phase nématique, phase smectique,... et les transitions entre phase s'observent à des températures critiques dépendant de la nature du cristal liquide. Dans des exemples, l'environnement de travail dans lequel est utilisé le MSLR selon l'invention est maintenu à une température inférieure à la température de la transition vers la phase isotrope du cristal liquide.

Tout cristal liquide en phase nématique peut être utilisé. Des cristaux liquides en phase nématique généralement comprennent plusieurs cyanobiphényls, et peuvent comprendre un mélange de plusieurs cyanobiphényls avec divers esters. Certains de ces cristaux liquides sont disponibles et connus dans le commerce sous la dénomination « E7 », tel que par exemple le cristal liquide vendu sous la marque Licrilite^{®} BL001 et produit par E. Merck, Darmstadt, Allemagne, ou encore produit par ses filiales telles que EM Industries, Hawthorne, N.Y. and Merck Industrial Chemical, Poole, England, qui est un mélange (en poids) de 51% de 4'-n-pentyl-n-cyanobiphenyl (5CB), 21% 4'-n-heptyl-n-cyanobiphenyl (7CB), 16% 4'-n-octoxy-4-cyanobiphenyl, 12% and 4'-n-pentyl-.4-cyanoterphenyl. On comprendra que d'autres mélanges de cristaux liquides vendus dans le commerce peuvent être utilisés, tels que par exemple ceux connus sous les dénomination E-31 qui est un mélange propriétaire de cyanobiphényles et d'un ester non cyanobiphénylique disponible auprès de E. Merck, supra ; le E-44 qui est un mélange propriétaire de cyanobiphényles, d'un cyanoterphényle et d'un ester non cyanobiphénylique disponible auprès de E. Merck, supra ; E63 produit par E. Merck, supra, est un mélange de cristaux liquides qui est similaire au E7 avec des cyclohexanes ajoutés.

La couche de cristal liquide est comprise entre deux éléments d'ancrage, respectivement un premier élément d'ancrage et un deuxième élément d'ancrage. On comprend que les deux éléments d'ancrage peuvent être parallèles, ou encore peuvent être sensiblement parallèles. Il est admis que la distance qui sépare le premier élément d'ancrage du deuxième détermine l'épaisseur de la couche de cristal liquide ; on peut préciser que c'est la distance entre la face du premier élément et la face du deuxième élément qui sont en contact avec le cristal liquide qui détermine l'épaisseur de la couche de cristal liquide. La distance minimale entre les deux éléments d'ancrage (ou encore entre les deux faces de chacune des couches en contact avec le cristal liquide) est égale ou supérieur à 20 µm.

Dans des exemples, l'épaisseur de la couche de cristal liquide est comprise entre 20 et 200 micromètres, bornes incluses. Cette épaisseur permet d'assurer une augmentation significative de la dynamique de contrôle de la phase optique. Dans un exemple, l'épaisseur de la couche de cristal liquide est comprise entre 20 et 100 micromètres, bornes incluses. Dans un autre exemple, le cristal liquide est de type « E7 » et d'épaisseur sensiblement égale à 50 µm en phase nématique.

Les deux éléments d'ancrage ont un rôle physique qui est de déterminer l'orientation moyenne de l'axe moléculaire des cristaux liquides, au moins à proximité des deux éléments d'ancrage. Une orientation moyenne est aussi appelée direction d'ancrage.

Dans des exemples, le premier et le deuxième éléments d'ancrage comprennent des accroches qui vont maintenir l'orientation moyenne de l'axe moléculaire des cristaux liquides suivant une direction d'ancrage, au moins à proximité des deux éléments d'ancrage. Dans des exemples, les accroches ne sont présentes que sur les faces des premier et deuxième éléments qui sont en contact avec le cristal liquide.

Le premier et le deuxième éléments d'ancrage déterminent des directions d'ancrage des cristaux liquides. Les accroches peuvent être positionnées parallèlement au plan associé à leur élément d'ancrage respectif, ou perpendiculairement à ce plan. Dans un exemple, la direction d'ancrage des deux couches d'ancrage peut être parallèle au plan associé à leur élément d'ancrage. Dans un exemple, la direction d'ancrage des deux couches peut être perpendiculaire au plan associé à leur élément d'ancrage. Dans un exemple, les directions d'ancrage déterminées par le premier élément d'ancrage et par le deuxième élément d'ancrage peuvent être orthogonale entre elles ; l'un des deux élément d'ancrage définit une direction d'ancrage parallèle et l'autre une direction d'ancrage perpendiculaire.

Le premier élément d'ancrage est celui par lequel un faisceau optique de lecture pénètre dans le module selon l'invention avant de traverser le cristal liquide. On rappelle que le faisceau optique de lecture est le faisceau dont on souhaite moduler une propriété.

Le deuxième élément d'ancrage est celui contre lequel est disposée une première couche ayant des propriétés réfléchissantes de la lumière, aussi appelée couche réfléchissante. La couche réfléchissante réfléchit donc le faisceau optique de lecture qui, après avoir traversé une deuxième fois la couche de cristal liquide et le premier élément d'ancrage, est le faisceau dont une propriété a été modulée. Une deuxième couche ayant des propriétés absorbantes de la lumière est disposée contre la première couche réfléchissante. La deuxième couche est aussi appelée couche absorbante. La couche absorbante a donc des propriétés absorbantes de la lumière pour le faisceau d'adressage, ce qui va modifier la température du cristal liquide.

Alternativement, le deuxième élément d'ancrage et la couche réfléchissante forment une seule couche ; une des faces de la couche réfléchissante est donc en contact avec le cristal liquide, et peut comprendre des accroches. Dans un autre exemple, le deuxième élément d'ancrage, la couche réfléchissante et la couche absorbante forment une couche unique ; ici encore, une des faces de cette couche unique est en contact avec le cristal liquide, et peut comprendre des accroches. Dans un exemple supplémentaire, la couche réfléchissante et la couche absorbante forment une seule et unique couche qui est disposée contre le deuxième élément d'ancrage ; le deuxième élément d'ancrage est donc en contact avec le cristal liquide.

Un faisceau optique qui entre en contact avec la couche absorbante subit un processus physique par lequel l'énergie électromagnétique de la lumière est transformée, totalement ou partiellement, en une autre forme d'énergie qui est de la chaleur. On comprendra que la couche absorbante permet un contrôle de la température locale du cristal liquide à l'aide d'un faisceau optique d'écriture : l'énergie de ce dernier est transformée en chaleur au point où le faisceau optique d'écriture entre en contact avec la couche absorbante, puis diffuse jusqu'au cristal liquide. Il est donc possible d'atteindre la température de transition vers la phase isotrope du cristal liquide compris entre les deux couches d'accroches, et donc de contrôler la biréfringence du cristal liquide.

La couche réfléchissante est apte à réfléchir une lumière ayant une longueur d'onde comprise dans une première plage de longueurs d'onde, et la couche absorbante est apte à absorber une lumière ayant une longueur d'onde comprise dans une deuxième plage de longueurs d'onde. La première plage de longueurs d'onde et la deuxième plage de longueurs d'onde peuvent se recouvrir ou ne pas se recouvrir suivant des exemples de réalisation. La première plage de longueurs d'onde, c'est-à-dire celle de la couche réfléchissante (ou première couche) peut être comprise entre 0,35 micromètres et 2,5 micromètres, bornes incluses ; c'est-à-dire que la lumière ayant une longueur d'one dans le spectre compris entre l'ultraviolet (UV) et l'infra-rouge (IR) sera réfléchie par la première couche.

On comprendra que la première plage de longueurs d'onde peut être beaucoup plus large, par exemple elle peut être est comprise entre 300 nanomètres et 10 microns, bornes incluses.

Dans des exemples, la couche réflective peut être une couche métallique comprenant au moins un métal. Le métal peut être un sélectionné parmi : l'or, l'argent, le chrome, le cuivre, le titane, le platine, le palladium. Ces matériaux offrent une bonne propriété réfléchissante de la lumière, et notamment pour des longueurs d'ondes comprises dans les domaines visible et infrarouge.

Dans des exemples, la couche absorbante peut comprendre au moins un matériau sélectionné parmi : du tellurure de cadmium (CdTe), du silicium (Si), du chrome noir, du germanium (Ge). Ces matériaux offrent une bonne absorption de la lumière, et notamment pour des longueurs d'ondes comprises dans le domaine visible.

Dans des exemples, la couche absorbante peut être une couche métallique comprenant au moins un métal. Le métal peut être au moins un sélectionné parmi : l'or, l'argent, le chrome, le cuivre, le titane, le platine, le palladium. Ces matériaux offrent une bonne propriété absorbante de la lumière, et notamment pour des longueurs d'ondes dans les domaines de l'ultra-violet ou du visible.

Dans des exemples, la première couche et la deuxième couche peuvent former une unique couche.

Dans des exemples, cette unique couche est une couche métallique comprenant un métal. Dans un exemple, le métal de l'unique couche comprend de de l'or.

Dans des exemples, cette unique couche à une épaisseur supérieure ou égale à 100 nanomètres.

Ainsi, la couche réfléchissante et la couche absorbante peuvent former une unique couche métallique comprenant de l'or, la couche unique ayant une épaisseur supérieure ou égale à 100 nanomètres. L'or possède en effet des propriétés réfléchissantes et absorbantes de la lumière pour des plages de longueurs d'onde qui ne se recouvrent pas. La première et la seconde plage de longueurs d'onde couvrent alors, respectivement, de 600 nm à 20 µm, et de 200 nm à 550 nm.

Dans des exemples, le premier élément d'ancrage peut comprendre un premier substrat transparent disposé contre le premier élément d'ancrage. Le premier substrat est disposé sur la face principale du premier élément d'ancrage qui n'est pas en contact avec le cristal liquide.

Le premier élément d'ancrage et le deuxième élément d'ancrage maintiennent le cristal liquide. Dans des exemples, une bordure étanche est disposée entre la première et la deuxième couches d'ancrage de manière à assurer que le cristal liquide reste au contact des deux couches d'ancrages ; c'est à dire qu'il ne puisse pas s'écouler.

Dans des exemples, la couche absorbante peut comprendre un deuxième substrat transparent disposé contre la couche absorbante. Le deuxième substrat est disposé sur la face de la couche absorbante qui n'est pas en contact avec la couche réflective.

Le premier substrat transparent peut comprendre au moins un matériau sélectionné parmi, mais n'est pas limité à, du verre, de la résine, du plastique, du BK7 (aussi connu sous le nom de verre borosilicate crown), de la silice fondue. Le matériau de ce premier substrat est transparent, c'est-à-dire qu'il se laisse traverser par le faisceau d'écriture. Généralement, la transparence d'un matériau dépend de la longueur d'onde de la lumière et de la nature du matériau : par exemple transparent pour certaines longueurs d'ondes et absorbant pour d'autres.

Additionnellement ou alternativement, le premier substrat peut être en fluorure de calcium. Ce matériau offre une bonne pénétration pour faisceau optique depuis l'ultraviolet jusqu' à l'infrarouge moyen et lointain, l'infrarouge moyen ayant des longueurs d'onde entre 2 et 5 micromètres, bornes incluses, et l'infrarouge lointain ayant des longueurs d'onde supérieures à 5 micromètres.

Dans des exemples, le second substrat transparent peut être en silice fondue. Ce matériau offre une bonne pénétration pour faisceau optique ayant une longueur d'onde dans le visible et le proche infrarouge, typiquement entre 300 nanomètres et 2.5 micromètres, bornes incluses.

Dans des exemples, le premier substrat transparent et/ou le deuxième substrat transparent peuvent porter un traitement antireflet qui minimise les pertes optiques aux interfaces avec le milieu ambiant, améliorant le rendement du MSLR. Le traitement est typiquement réalisé sur les faces en contact avec le milieu ambiant. Le traitement antireflet peut de plus favoriser le passage de certaines plages de longueurs d'onde. Par exemple, le traitement anti-reflet sur le premier substrat transparent peut favoriser les longueurs d'onde du faisceau de lecture et celui sur le deuxième substrat transparent peut favoriser les longueurs d'onde du faisceau d'écriture.

Dans des exemples, le premier élément d'ancrage peut comprendre le premier substrat transparent, formant ainsi une seule et unique couche. Le substrat transparent maintient donc la couche de cristal liquide et joue le rôle d'élément d'ancrage. Les exemples de couche d'accroche suivants peuvent donc s'appliquer.

Dans des exemples, le premier élément d'ancrage et/ou le deuxième élément d'ancrage peuvent comprendre un matériau sélectionné parmi un polyimide (IP) ou du SiOx (oxyde de silicium).

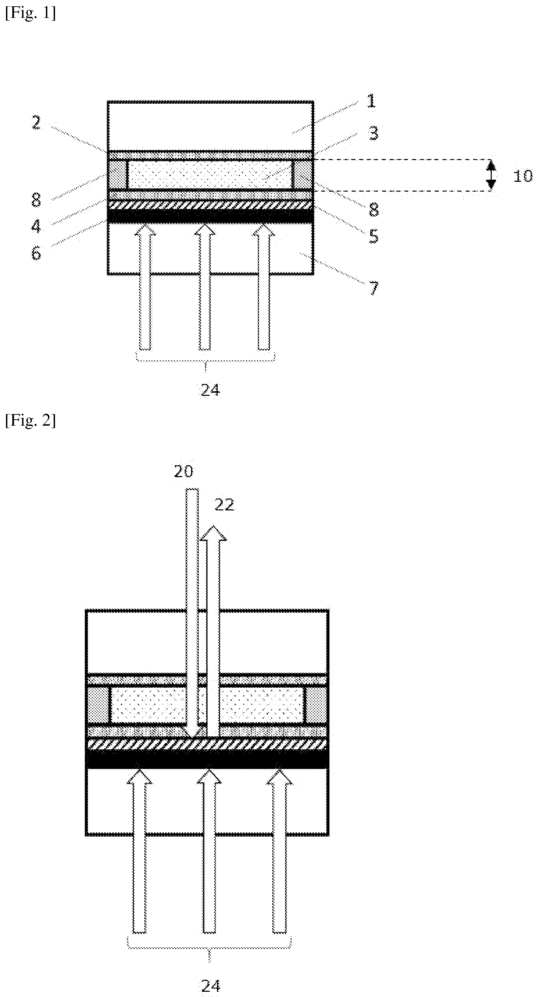

En référence à la FIG. 1, il est maintenant discuté un exemple schématique de la structure d'un MSLR selon l'invention. L'exemple de la FIG. 1 est une vue en coupe d'un MSLR selon l'invention. La coupe est réalisée selon un plan ayant une direction moyenne semblable à celle des faisceaux de lecture pouvant être modulés par le MSLR.

Dans l'exemple de la FIG. 1, le premier élément 2 d'ancrage et le deuxième élément 4 d'ancrage ont chacun une épaisseur qui leur propre ; ils peuvent avoir la même épaisseur. Le premier élément 2 d'ancrage et le deuxième élément 4 d'ancrage ont chacun deux faces principales ; l'une d'entre elle est en contact avec le cristal liquide 3. Dans l'exemple de la FIG. 1, les deux faces principales en contact avec le cristal liquide sont parallèles et distantes d'une distance 10 qui détermine l'épaisseur de la couche 3 de cristal liquide. Le premier élément d'ancrage 2 et le deuxième élément d'ancrage 4 déterminent des directions relatives d'accroche qui peuvent être parallèles ou perpendiculaires. Une bordure étanche 8 est disposée entre les deux couches 2, 4 afin d'assurer que le cristal liquide reste en place entre les deux couches. La bordure est placée tout le long d'une zone périphérique des deux couches d'ancrages. L'épaisseur de la bordure est donc égale à la distance 10.

Dans cet exemple, le deuxième élément d'ancrage est la couche contre laquelle est disposée :
- Une première couche 5 ayant des propriétés réfléchissantes de la lumière;
- Une deuxième couche 6 ayant des propriétés absorbantes de la lumière.

Dans cet exemple, un premier substrat transparent 1 est disposé contre le premier élément d'ancrage, et un deuxième substrat transparent 7 est disposé contre le deuxième élément d'ancrage. Dans cet exemple de la FIG. 1, les deux substrats transparents ont une même épaisseur, étant entendu qu'ils pourraient avoir des épaisseurs différentes.

On comprend que l'exemple de la FIG. 1 n'introduit aucune limitation des exemples des éléments formant la structure du MSLR qui ont été précédemment discutés, et ces exemples des éléments formant la structure du MSLR peuvent être combinés entre eux. Par exemple, la première couche 5 et la deuxième couche 6 peuvent former une unique couche métallique comprenant de l'or et ayant une épaisseur supérieure ou égale à 100 nanomètres. Par exemple, les substrats transparents 1, 7 peuvent être en verre. Par exemple, les deux couches d'ancrages 2, 4 peuvent être formées d'un matériau comprenant du polyimide (IP), ou bien encore d'une ou plusieurs couches structurées de SiOx.

La FIG. 2 illustre un exemple de fonctionnement du module MSLR selon l'invention. Les éléments structurels le composant sont identiques à ceux de la FIG. 1.

Un faisceau incident de lecture 20 (ou plus simplement faisceau de lecture) est envoyé en direction du module MSLR. Le faisceau de lecture passe au travers le cristal liquide. Sur la FIG. 2, il passe au travers du premier substrat transparente et du premier élément d'ancrage. Après avoir traversé le cristal liquide, le faisceau de lecture est réfléchi par la première couche réfléchissante 5 et sort du MSLR. Le faisceau de lecture 22 est le faisceau modulé. La modulation du faisceau 20 dépend de l'énergie qui est apportée par un faisceau optique d'écriture 24 qui chauffe localement la couche absorbante. La modulation est donc définie par le faisceau d'écriture 24.

Dans des exemples, le module MSLR selon l'invention peut en outre comprendre un masque d'amplitude permettant de contrôler la quantité de lumière atteignant un point de la deuxième couche (absorbante). En effet, afin de de pouvoir contrôler avec précision l'échauffement du cristal liquide, il faut s'assurer de la localisation du ou des points d'échauffement que le faisceau d'écriture génère sur la couche absorbante. Le masque d'amplitude peut être une grille comprenant des ouvertures qui y sont disposées et laissent passer le faisceau optique d'écriture.

Le module MSLR selon l'invention peut donc être utilisé dans un système optique qui comprend une première source pour générer un faisceau optique de lecture et une deuxième source pour générer un faisceau optique d'adressage. La lumière générée par le faisceau optique de lecture pénètre donc dans le modulateur via le premier élément d'ancrage et en ressort par ce même premier élément d'ancrage. La lumière générée par la deuxième source est dirigée et vient en contact sur la deuxième couche absorbante.

Dans des exemples, le faisceau optique d'écriture peut être formé par différents dispositifs.

Dans des exemples, le faisceau optique d'écriture peut être produit par une diode électroluminescente et structuré par un modulateur spatial de lumière.

Dans des exemples, le faisceau optique d'écriture peut être produit par une diode laser dont l'intensité est modulée temporellement et dont la direction est balayée au moyen d'un ou deux systèmes optiques de déflection.

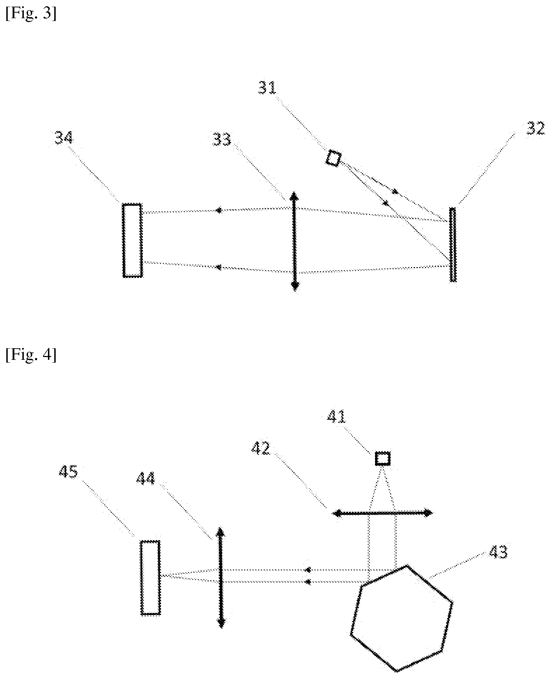

Dans un premier exemple spécifique, représenté sur la FIG. 3 comprend : une diode laser 31, une matrice de micro-miroirs 32 et un système optique de projection 33 permettant d'imager ladite matrice sur le MSLR. 34 Suivant l'orientation individuelle des micro-miroirs, un éclairement bidimensionnel structuré est formé sur le modulateur.

Un second exemple spécifique, représenté sur la FIG. 4, comprend : une diode laser 41, une optique de collimation 42, un miroir polygonal rotatif 43 et une lentille de fo-calisation 44. En l'absence de modulation du courant de la diode laser, ce dispositif forme une ligne continue sur la valve optique 45. Par modulation du courant de diode on forme une illumination unidimensionnelle structurée sur le modulateur.

Dans ces exemples, la diode laser peut avoir une puissance moyenne d'environ 1W et de longueur d'onde approximativement égale à 450 nm. On comprend que les caractéristiques de la diode dépendent du cas d'usage et que toute diode peut être utilisée.

Le MSLR selon l'invention peut avantageusement être appliqué à la correction du front d'onde d'impulsions laser ultra-brèves, tel que par exemple décrit par le document : F. Druon et al, "Wave-front correction of femtosecond terawatt lasers by deformable mirrors," Opt. Lett. 23, 1043-1045 (1998).

Le MSLR selon l'invention peut avantageusement être appliqué à l'optimisation ou encore à la mise en forme de la fonction d'étalement du point (« point spread function », PSF) au foyer des microscopes tel que décrit par exemple dans le document Neil, M. A. A., T. Wilson, and R. Juskaitis. "A wavefront generator for complex pupil function synthesis and point spread function engineering." Journal of Microscopy 197.3 (2000): 219-223.

Combiné avec une ligne à dispersion nulle, le dispositif selon l'invention peut avantageusement être appliqué à la compression et à la mise en forme temporelle des impulsions émises par les lasers femto-secondes, tel que décrit dans le document A. M. Weiner, dans "Ultrafast optical pulse shaping: A tutorial review." (Optics Communications 284.15 (2011): 3669-3692.).

Combiné avec une ligne à dispersion nulle, le dispositif selon l'invention peut avantageusement être appliqué à la génération des impulsions nécessaires à la spectroscopie résolue en temps et à la spectroscopie multidimensionnelle, tels que décrit par Sang-Hee Shim et M. Zanni dans : Phys.Chem.Chem.Phys. n°11, (2009), p. 748-761 « How to turn your pump-probe instrument into a multidimensional spectrometer : 2D IR and Vis spectroscopies via pulse shaping ».

Combiné avec une ligne à dispersion nulle, le dispositif selon l'invention peut avantageusement concerner la génération des impulsions nécessaires à la microscopie multi-photonique, tel que décrit dans le document Jennifer Ogilvie et al. dans : Optics Express, vol.14, n°2, (2006), p.759-766 « Use of coherent control for selective two-photon fluorescence microscopy in live organisms ».

## Revendications

1. Modulateur spatial de lumière réflectif à adressage optique pour moduler en continu la phase et/ou la polarisation d'un faisceau optique de lecture, comprenant :
- une couche (3) de cristal liquide en phase nématique thermotrope d'une épaisseur supérieure ou égale à 20 micromètres, la couche de cristal liquide étant comprise entre un premier élément (2) d'ancrage et un deuxième élément (4) d'ancrage ;
- une première couche (5), disposée contre le deuxième élément d'ancrage, possédant des propriétés réfléchissantes de la lumière ayant une longueur d'onde appartenant à une première plage de longueurs d'onde ;
- une deuxième couche (6), disposée contre la première couche, ayant des propriétés absorbantes de la lumière ayant une longueur d'onde comprise dans une deuxième plage de longueurs d'ondes.

2. Modulateur selon la revendication 1, dans lequel la première plage de longueurs d'onde, comprise entre 0,5 micromètres et 2,5 micromètres, bornes incluses, et la deuxième plage de longueurs d'onde se recouvrent au moins partiellement ou ne se recouvrent pas.

3. Modulateur selon la revendication 1 ou 2, dans lequel la première couche est une couche métallique comprenant au moins un métal, de préférence le métal étant sélectionné parmi : l'or, l'argent, le chrome, le cuivre, le titane, le platine, le palladium.

4. Modulateur selon la revendication 3, dans lequel la deuxième couche est une couche métallique comprenant au moins un métal, le métal étant de préférence sélectionné parmi : l'or, l'argent, le chrome, le cuivre, le titane, le platine, le palladium.

5. Modulateur selon la revendication 4, dans lequel la première couche et la deuxième couche forment une unique couche métallique comprenant un métal, le métal de l'unique couche comprenant de préférence de l'or, et l'unique couche ayant de préférence une épaisseur supérieure ou égale à 100 nanomètres.

6. Modulateur selon la revendication 1, dans lequel la première plage de longueurs d'onde de la première couche est comprise entre 200 nanomètres et 10 micromètres, bornes incluses, la deuxième plage de longueurs d'onde se recouvrent au moins partiellement ou ne se recouvrent pas, et la première couche est une couche métallique comprenant au moins un métal, de préférence le métal étant sélectionné parmi : l'or, l'argent, le chrome, le cuivre, le titane, le platine, le palladium.

7. Modulateur selon l'une quelconque des revendications 2 à 3, dans lequel deuxième couche comprend au moins un matériau sélectionné parmi : du tellurure de cadmium (CdTe), du silicium (Si), du germanium (Ge), du chrome noir.

8. Modulateur selon l'une quelconque des revendications précédentes, dans lequel le premier élément d'ancrage et/ou le deuxième élément d'ancrage sont formées d'au moins un matériau sélectionné parmi un polyimide (IP), un SiOx structuré en une ou plusieurs sous-couches, une couche métallique structurée.

9. Modulateur selon l'une quelconque des revendications précédentes, comprenant en outre :
- un premier substrat transparent disposé contre le premier élément d'ancrage ;
- un deuxième substrat transparent disposé contre le deuxième élément d'ancrage.

10. Modulateur selon la revendication 9, dans lequel le premier substrat et/ou le deuxième substrat comprend au moins un matériau transparent sélectionné parmi un verre, une résine, un plastique, un verre borosilicate crown, une silice fondue.

11. Modulateur selon l'une quelconque des revendications 9 à 10, dans lequel le premier substrat transparent comprend le premier élément d'ancrage.

12. Modulateur selon l'une des revendications précédentes, dans lequel le premier élément d'ancrage et le deuxième élément d'ancrage déterminent des directions d'ancrage qui sont orientées parallèlement et/ou perpendiculairement.

13. Modulateur selon la revendication 12, dans lequel le premier et le deuxième élément d'ancrage comprennent des accroches qui déterminent les directions d'ancrage, contrôlant ainsi une orientation moléculaire moyenne locale du cristal liquide.

14. Modulateur selon l'une quelconque des revendications 12 à 13, dans lequel les accroches du premier élément d'ancrage et du deuxième élément d'ancrage déterminent une même direction d'ancrage ou deux directions d'ancrage orthogonales entre elles.

15. Modulateur selon l'une quelconque des revendications précédentes, comprenant en outre un masque d'amplitude apte à contrôler la quantité de lumière atteignant un point de la deuxième couche.

16. Modulateur selon l'une quelconque des revendications précédentes, comprenant en outre une bordure étanche maintenant le cristal liquide entre la première et la deuxième couche d'ancrage.

17. Modulateur selon l'une quelconque des revendications précédentes, dans lequel l'épaisseur du cristal liquide est comprise entre 20 et 200 micromètres, bornes incluses.

18. Système optique comprenant :
- un modulateur selon l'une quelconque des revendications 1 à 17 ;
- une source lumineuse pour générer un faisceau optique d'adressage ayant une longueur d'onde comprise dans la deuxième plage de longueurs d'onde.

## Patentansprüche

1. Optisch adressierter räumlicher Reflexionslichtmodulator zum kontinuierlichen Modulieren der Phase und/oder Polarisation eines optischen Lesestrahls, umfassend:
- eine Schicht (3) aus thermotropem Flüssigkristall in nematischer Phase mit einer Stärke von mehr als oder gleich wie 20 Mikrometer, wobei die Schicht aus Flüssigkristall zwischen einem ersten Verankerungselement (2) und einem zweiten Verankerungselement (4) liegt;
- eine erste Schicht (5), die an dem zweiten Verankerungselement angeordnet ist und lichtreflektierende Eigenschaften mit einer Wellenlänge aus einem ersten Wellenlängenbereich aufweist;
- eine zweite Schicht (6), die an der ersten Schicht angeordnet ist und lichtabsorbierende Eigenschaften mit einer Wellenlänge innerhalb eines zweiten Wellenlängenbereichs aufweist.

2. Modulator nach Anspruch 1, wobei der erste Wellenlängenbereich, der zwischen 0,5 Mikrometer und 2,5 Mikrometer, einschließlich der Grenzwerte, liegt, und der zweite Wellenlängenbereich sich zumindest teilweise überlappen oder nicht überlappen.

3. Modulator nach Anspruch 1 oder 2, wobei die erste Schicht eine Metallschicht ist, umfassend mindestens ein Metall, wobei das Metall vorzugsweise ausgewählt ist aus: Gold, Silber, Chrom, Kupfer, Titan, Platin, Palladium.

4. Modulator nach Anspruch 3, wobei die zweite Schicht eine Metallschicht ist, umfassend mindestens ein Metall, wobei das Metall vorzugsweise ausgewählt ist aus: Gold, Silber, Chrom, Kupfer, Titan, Platin, Palladium.

5. Modulator nach Anspruch 4, wobei die erste Schicht und die zweite Schicht eine einzige Metallschicht bilden, umfassend ein Metall, das Metall der einzigen Schicht vorzugsweise umfassend Gold, und wobei die einzige Schicht vorzugsweise eine Stärke von mehr als oder gleich wie 100 Nanometer aufweist.

6. Modulator nach Anspruch 1, wobei der erste Wellenlängenbereich der ersten Schicht zwischen 200 Nanometern und 10 Mikrometern einschließlich der Grenzwerte liegt, der zweite Wellenlängenbereich sich zumindest teilweise oder überhaupt nicht überlappt, und die erste Schicht eine Metallschicht ist, umfassend mindestens ein Metall, das Metall vorzugsweise ausgewählt ist aus: Gold, Silber, Chrom, Kupfer, Titan, Platin, Palladium.

7. Modulator nach einem der Ansprüche 2 bis 3, wobei die zweite Schicht mindestens ein Material umfasst, das ausgewählt ist aus: Cadmiumtellurid (CdTe), Silizium (Si), Germanium (Ge), Schwarzchrom.

8. Modulator nach einem der vorherigen Ansprüche, wobei das erste Verankerungselement und/oder das zweite Verankerungselement aus mindestens einem Material gebildet sind, das ausgewählt ist aus Polyimid (IP), SiOx, das in einer oder mehreren Unterschichten strukturiert ist, einer strukturierten Metallschicht.

9. Modulator nach einem der vorherigen Ansprüche, ferner umfassend:
ein erstes transparentes Substrat, das an dem ersten Verankerungselement angeordnet ist,
ein zweites transparentes Substrat, das an dem zweiten Verankerungselement angeordnet ist.

10. Modulator nach Anspruch 9, wobei das erste Substrat und/oder das zweite Substrat mindestens ein transparentes Material umfasst, das ausgewählt ist aus Glas, Harz, Kunststoff, Crown Borosilikatglas, geschmolzenem Siliziumdioxid.

11. Modulator nach einem der Ansprüche 9 bis 10, wobei das erste transparente Substrat das erste Verankerungselement umfasst.

12. Modulator nach einem der vorherigen Ansprüche, wobei das erste Verankerungselement und das zweite Verankerungselement Verankerungsrichtungen bestimmen, die parallel und/oder senkrecht ausgerichtet sind.

13. Modulator nach Anspruch 12, wobei das erste und das zweite Verankerungselement Haken umfassen, die die Verankerungsrichtungen bestimmen, wodurch eine lokale durchschnittliche molekulare Ausrichtung des Flüssigkristalls gesteuert wird.

14. Modulator nach einem der Ansprüche 12 bis 13, wobei die Haken des ersten Verankerungselements und des zweiten Verankerungselements eine gleiche Verankerungsrichtung oder zwei zueinander orthogonale Verankerungsrichtungen bestimmen.

15. Modulator nach einem der vorherigen Ansprüche, ferner umfassend eine Amplitudenmaske, die geeignet ist, um die Lichtmenge zu steuern, die einen Punkt auf der zweiten Schicht erreicht.

16. Modulator nach einem der vorherigen Ansprüche, ferner umfassend einen dichten Rand, der den Flüssigkristall zwischen der ersten und der zweiten Verankerungsschicht hält.

17. Modulator nach einem der vorherigen Ansprüche, wobei die Stärke des Flüssigkristalls zwischen 20 und 200 Mikrometern einschließlich der Grenzwerte liegt.

18. Optisches System, umfassend:
- einen Modulator nach einem der Ansprüche 1 bis 17;
- eine Lichtquelle zum Erzeugen eines optischen Adressierungsstrahls, der eine Wellenlänge aufweist, die innerhalb des zweiten Wellenlängenbereichs liegt.

## Claims

1. A thermo-optically addressed spatial light modulator for continuously modulating the phase and/or polarization of a reading optical beam, comprising:
- a layer (3) of thermotropic nematic phase liquid crystal with a thickness greater than or equal to 20 micrometers, the liquid crystal layer being between a first anchoring element (2) and a second anchoring element (4);
- a first layer (5), disposed against the second anchoring element, having light reflecting properties having a wavelength belonging to a first range of wavelengths;
- a second layer (6), disposed against the first layer, having light absorbing properties having a wavelength included in a second range of wavelengths.

2. The modulator according to claim 1, wherein the first range of wavelengths, between 0.5 micrometers and 2.5 micrometers, limits included, and the second range of wavelengths at least partially overlap or do not overlap.

3. The modulator according to claim 1 or 2, wherein the first layer is a metallic layer comprising at least one metal, preferably the metal being selected from: gold, silver, chromium, copper, titanium, platinum, palladium.

4. The modulator according to claim 3, wherein the second layer is a metallic layer comprising at least one metal, the metal preferably being selected from: gold, silver, chromium, copper, titanium, platinum, palladium.

5. The modulator according to claim 4, wherein the first layer and the second layer form a single metallic layer comprising a metal, the metal of the single layer preferably comprising gold, and the single layer preferably a thickness greater than or equal to 100 nanometers.

6. The modulator according to claim 1, wherein the first wavelength range of the first layer is between 200 nanometers and 10 micrometers, limits included, the second wavelength range at least partially overlapping or not overlapping, and the first layer is a metallic layer comprising at least one metal, the metal preferably being selected from: gold, silver, chromium, copper, titanium, platinum, palladium.

7. The modulator according to any one of claims 2 to 3, wherein the second layer comprises at least one material selected from: cadmium telluride (CdTe), silicon (Si), germanium (Ge), black chrome.

8. The modulator according to any one of the preceding claims, wherein the first anchoring element and/or the second anchoring element are formed of at least one material selected from a polyimide (IP), a SiOx structured in one or more sub-layers, a structured metal layer.

9. The modulator according to any one of the preceding claims, further comprising:
- a first transparent substrate disposed against the first anchoring element;
- a second transparent substrate disposed against the second anchoring element.

10. The modulator according to claim 9, wherein the first substrate and/or the second substrate comprises at least one transparent material selected from glass, resin, plastic, borosilicate crown glass, fused silica.

11. The modulator according to any one of claims 9 to 10, wherein the first transparent substrate comprises the first anchoring element.

12. The modulator according to one of the preceding claims, wherein the first anchoring element and the second anchoring element define anchoring directions which are oriented parallel and/or perpendicular.

13. The modulator according to claim 12, wherein the first and second anchoring elements include hooks which determine the anchoring directions, thereby controlling a local mean molecular orientation of the liquid crystal.

14. The modulator according to any one of claims 12 to 13, wherein the hooks of the first anchoring element and of the second anchoring element determine the same anchoring direction or two anchoring directions orthogonal to one another.

15. The modulator according to any one of the preceding claims, further comprising an amplitude mask adapted to control the amount of light reaching a point of the second layer.

16. The modulator according to any one of the preceding claims, further comprising a sealed rim retaining the liquid crystal between the first and the second anchoring layer.

17. The modulator according to any one of the preceding claims, wherein the thickness of the liquid crystal is between 20 and 200 micrometers, limits included.

18. An optical system, comprising:
- a modulator according to any one of claims 1 to 17;
- a light source for generating an addressing optical beam having a wavelength comprised in the second wavelength range.
